# EUROPEAN PATENT SPECIFICATION

(11) **EP 2 028 037 B1**
(45) Date of publication and mention of the grant of the patent: **11.09.2013**
(21) Application number: 08013779.7
(22) Date of filing: 31.07.2008
(51) Int. Cl.: B60N 2/30

(54) **Vehicle seat**
Fahrzeugsitz
Siège de véhicule

(30) Priority: 31.07.2007 JP 2007199404
(43) Date of publication of application: 25.02.2009
(73) Proprietor: NHK Spring Co., Ltd., Yokohama-shi, Kanagawa 236-0004 (JP)
(72) Inventor: Kobayashi, Shin-ichi, Yokohama-shi Kanagawa 236-0004 (JP)
(74) Representative: Eisenführ, Speiser & Partner

(56) References cited:
- DE-A1-102006 001 901
- JP-A- 2002 079 860
- JP-A- 2005 280 378

## Description

### BACKGROUND OF THE INVENTION

### Technical Field

The present invention relates to a seat for a vehicle.

### Background Art

A conventional vehicle seat includes an intermediate joint connected to a base end portion of a seat back and includes a first locking device to prevent the intermediate joint from tilting toward the bottom of a vehicle body. The conventional vehicle seat also includes a second locking device to prevent the seat back from tilting toward the bottom of the vehicle body. In this case, while a seat cushion is tilted toward the front side of the vehicle body, locking of the first locking device is released, and locking of the second locking device is then released (for example, see Japanese Unexamined Patent Application Publication No. 2005-280378).

Another conventional vehicle seat includes a remote-control portion, a sliding device installed in a seat cushion, a reclining device installed in a seat back, and operating cables connecting the remote-control portion with each of the sliding device and the reclining device. This conventional vehicle seat also includes releasing levers to release the locking of the sliding device of the seat cushion and the locking of the reclining device of the seat back. The locking of the sliding device and the locking of the reclining device are released in turn by operating the remote-control portion. Alternatively, the locking of the sliding device and the locking of the reclining device may be released by operating the releasing levers (for example, see Japanese Unexamined Patent Application Publication No. 2002-79860). This document represents the closest Prior art.

In the vehicle seat disclosed in Japanese Unexamined Patent Application Publication No. 2005-280378, while the seat cushion is tilted toward the front side of the vehicle body, the locking of the seat back is released. That is, the seat cushion and the seat back cannot be independently operated. Therefore, although the conventional vehicle seat is superior in convenience for an operator, the safety for users of a vehicle is reduced.

In the vehicle seat disclosed in Japanese Unexamined Patent Application Publication No. 2002-79860, the operating cables are provided so as to connect the remote-control portion with each of the sliding device and the reclining device. Therefore, the operating cables are arranged in a complicated manner. Moreover, in this vehicle seat, the timing of releasing the locking of the sliding device and the locking of the reclining device is adjusted by loosening the operating cables. Therefore, when the operating cables are loosened, the operating cables may be caught by parts of the vehicle, whereby the reliability of the vehicle seat is low.

### SUMMARY OF THE INVENTION

An object of the present invention is to provide a vehicle seat in which convenience and safety for users of a vehicle in which the seat is installed are improved, and reliability is improved.

The present invention provides a vehicle seat comprising a seat cushion, a seat back, a shifting device for shifting the seat cushion, a tilting device for tilting the seat back, a cushion locking device for preventing the shift of the seat cushion, and a back locking device for preventing the tilt of the seat back. The vehicle seat comprises a cushion lock releasing device for releasing the locking of the cushion locking device and comprises a back lock releasing device for releasing the locking of the back locking device. The vehicle seat also comprises an adjusting device for adjusting the timing of release of the locking of the cushion locking device and the timing of release of the locking of the back locking device, and comprises an operating device for operating the adjusting device.

According to the present invention, the adjusting device is operated by operating the operating device, and the locking of the cushion locking device and the locking of the back locking device are thereby released in turn. Therefore, the convenience for users of the vehicle can be improved. Moreover, by operating the cushion lock releasing device and the back lock releasing device, the locking of the cushion locking device and the locking of the back locking device can be independently released. In this case, the locking of the back locking device can be released after the locking of the cushion locking device is released and safety is confirmed, whereby the safety for users of the vehicle can be improved. Furthermore, the adjusting device is operated by operating the operating device, and the locking of the cushion locking device and the locking of the back locking device are thereby released in turn. Therefore, the reliability of the vehicle seat can be improved.

In the present invention, the cushion lock releasing device preferably includes a cushion lock releasing cable for releasing the locking of the cushion locking device. The adjusting device preferably includes a back lock releasing cable for releasing the locking of the back locking device and preferably includes a relay unit having a cooperating portion for cooperating the cushion lock releasing cable and the back lock releasing cable. The operating device preferably includes an operating cable for operating the cooperating portion.

According to the present invention, by operating the operating device, the operating cable is pulled so that the cooperating portion works. Then, the cushion lock releasing cable and the back lock releasing cable cooperate, and the locking of the cushion locking device and the locking of the back locking device are thereby released in turn. As a result, the convenience for uses of the vehicle can be improved.

In the present invention, the back lock releasing cable preferably has a first engaging portion that is engageable with the back lock releasing device. The back lock releasing device preferably has a second engaging portion that is engaged with the first engaging portion by operating the operating device. The first engaging portion is preferably disposed so as to be separated from the second engaging portion with a predetermined distance. In this condition, when the operating device is operated, after the locking of the cushion locking device is released, the first engaging portion is engaged with the second engaging portion, and then the locking of the back locking device is released. According to the present invention, the locking of the cushion locking device and the locking of the back locking device can be released in turn, whereby the convenience for uses of vehicles can be improved.

In the present invention, the back lock releasing cable preferably has a third engaging portion that is engaged with the cooperating portion by operating the operating device. The third engaging portion is preferably disposed so as to be separated from the cooperating portion with a predetermined distance. In this condition, when the operating device is operated, the cooperating portion shifts toward the third engaging portion, and the locking of the cushion locking device is released. Then, the cooperating portion engages with the third engaging portion, and the locking of the back locking device is released. According to the present invention, the locking of the cushion locking device and the locking of the back locking device can be released in turn, whereby the convenience for uses of the vehicle can be improved.

In the present invention, the second engaging portion is preferably provided with an opening portion to which the back lock releasing cable is inserted. In this condition, when the back lock releasing device is operated, the second engaging portion shifts in a direction opposite to the first engaging portion, and the locking of the back locking device is thereby released.

According to the present invention, since the back lock releasing cable is inserted into the opening portion, when the second engaging portion shifts, the back lock releasing cable does not shift. Therefore, the back lock releasing cable may not be loosened and is thereby not caught by members that make up a part of a vehicle. As a result, the reliability of the vehicle seat can be improved.

According to the present invention, the convenience and the safety for users of the vehicle can be improved. Moreover, the reliability of the vehicle seat can be increased.

### BRIEF DESCRIPTION OF THE DRAWINGS

Fig. 1 is a perspective view showing a vehicle seat in which a cushion lock and a back lock are set.
Fig. 2 is a perspective view showing a vehicle seat in which a cushion lock and a back lock are released.
Fig. 3 shows a schematic structure of a relay unit and peripheral objects.
Fig. 4 shows a back lock and peripheral objects.
Fig. 5A and 5B show schematic structures of a relay unit when a remote-control lever is used.
Fig. 6 shows a schematic structure of a relay unit when a cushion control strap is used.
Fig. 7 shows a schematic structure of a relay unit and peripheral objects relating to a second embodiment.

### EMBODIMENTS OF THE INVENTION

### (1) First Embodiment

### Structure of Vehicle Seat

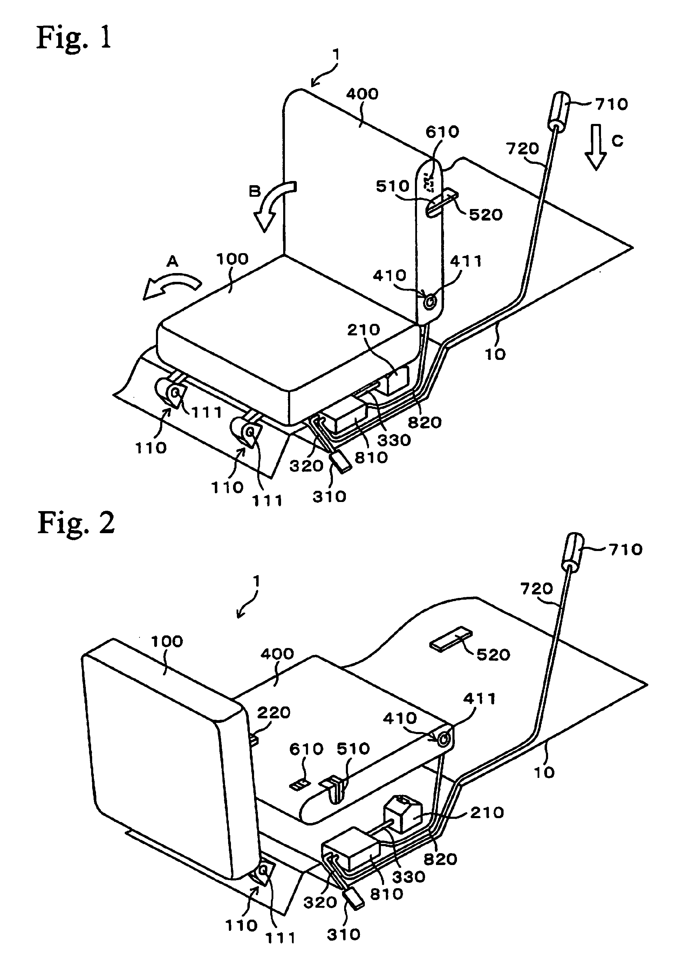

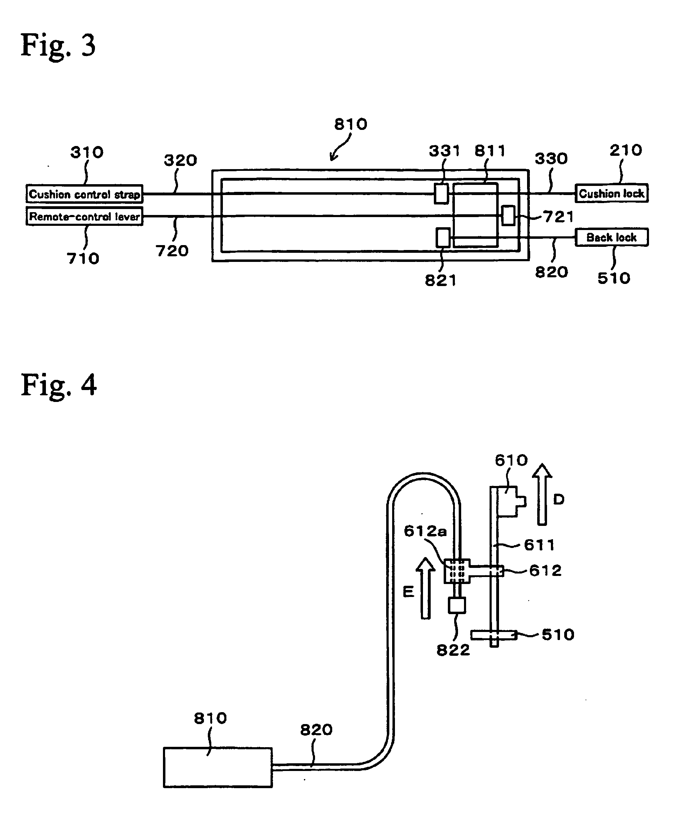

Hereinafter, an embodiment of the present invention will be described with reference to the figures. Fig. 1 is a perspective view showing a vehicle seat in which a cushion lock and a back lock are set. Fig. 2 is a perspective view showing a vehicle seat in which a cushion lock and a back lock are released. Fig. 3 shows a schematic structure of a relay unit and peripheral objects. Fig. 4 shows a back lock and peripheral objects.

As shown in Figs. 1 and 2, a vehicle seat 1 is provided on a body 10 of a vehicle, and the vehicle seat 1 includes a cushion lock 210 for preventing tilt of a seat cushion 100 and includes a back lock 510 for preventing tilt of a seat back 400. As shown in Fig. 1, in the vehicle seat 1, when the cushion lock 210 and the back lock 510 are set, the seat cushion 100 and the seat back 400 can be used as a seat for seating an occupant. As shown in Fig. 2, when the cushion lock 210 and the back lock 510 are released, the seat cushion 100 tilts in a direction of arrow A and stands upright, and the seat back 400 tilts in a direction of arrow B and is approximately flat.

The seat cushion 100 is fixed to the body 10 through a standing device (shifting device) 110 affixed to the body 10. The standing device 110 has a hinge 111 and a spring (not shown in the figure), and it supports the seat cushion 100 in a manner so as to be tiltable. The seat cushion 100 is urged in the direction of arrow A by the spring. The seat cushion 100 tilts in the direction of arrow A by the effect of the standing device 110 and stands upright.

It is not limited to a case in which the seat cushion 100 stands upright, and the seat cushion 100 may be tilted after the seat cushion stands upright, and then the seat cushion may be approximately flat. It is not limited to the case in which the seat cushion 100 stands upright, and the seat cushion 100 may be shifted to the left of Fig. 1. That is, the seat cushion may have a parallel link and be shifted in parallel.

The cushion lock 210 is fixed to the body 10 and engages with a cushion striker 220 fixed at the bottom surface of the seat cushion 100. The cushion lock 210 engages with the cushion striker 220 so as to prevent the tilt of the seat cushion 100. In this condition, the cushion lock 210 is set. On the other hand, by releasing the engagement between the cushion lock 210 and the cushion striker 220, the seat cushion 100 tilts in the direction of arrow A. In this condition, the cushion lock 210 is released. In the embodiment, the cushion lock 210 and the cushion striker 220 form a cushion locking device.

Fig. 1 shows a reference numeral 310 indicating a cushion control strap. The cushion control strap 310 is provided at the side surface of the seat cushion 100 and can be operated by pulling. Since the cushion control strap 310 is provided at the side surface of the seat cushion 100, when the vehicle seat 1 is not occupied by a user, the cushion control strap 310 can be pulled. The cushion control strap 310 is connected to an end of a strap cable 320. As shown in Fig. 3, the other end of the strap cable 320 is connected to a cushion lock releasing cable 330 through a fourth engaging portion 331 of the cushion lock releasing cable 330. In the embodiment, the cushion control strap 310, the strap cable 320, the cushion lock releasing cable 330, and the fourth engaging portion 331 form a cushion lock releasing device.

When the vehicle seat 1 is not occupied by a user, the cushion control strap 310 is pulled by an operator (not shown in the figure), so that the cushion lock 210 is released through the strap cable 320, the fourth engaging portion 331, and the cushion lock releasing cable 330.

The seat back 400 is fixed on the body 10 through a tilting device 410 fixed to the body 10. Therefore, the seat cushion 100 and the seat back 400 are respectively fixed on the body 10. The tilting device 410 has a hinge 411 and a spring (not shown in the figure), and tiltably supports the seat back 400. The seat back 400 is urged in a direction of arrow B by the spring and tilts in the direction of arrow B by the effect of the tilting device 410.

The back lock 510 is provided at the side surface of the seat back 400 and engages with a back striker 520 fixed to the body 10. The back lock 510 engages with the back striker 520 so as to prevent the tilt of the seat back 400. In this condition, the back lock 510 is set. By disengaging the back lock 510 and the back striker 520, the seat back 400 tilts in the direction of arrow B. In this condition, the back lock 510 is released. In the embodiment, the back lock 510 and the back striker 520 form a back locking device.

Fig. 1 shows a reference numeral 610 indicating a back control lever. The back control lever 610 is provided at the back surface of the seat back 400 and can be operated by raising it in a direction of arrow D shown in Fig. 4. The back control lever 610 is fixed to an end of a bracket 611. As shown in Fig. 4, the other end of the bracket 611 engages with the back lock 510 so as to be freely disengaged therewith. When the bracket 611 and the back lock 510 engage with each other, the back lock 510 is set. On the other hand, when the bracket 611 and the back lock 510 are disengaged, the back lock 510 is released.

The bracket 611 is provided with a second engaging portion 612 between both ends thereof, and the second engaging portion 612 has an opening portion 612a. A back lock releasing cable 820 is slidably inserted into the opening portion 612a of the second engaging portion 612, and the back lock release portion 820 will be described hereinafter. In the embodiment, the back control lever 610, the bracket 611, and the second engaging portion 612 form a back lock releasing device.

When the back control lever 610 is raised by an operator (not shown in the figure), the bracket 611 and the back lock 510 are disengaged, and the back lock 510 is thereby released. In this case, in accordance with the shift of the bracket 611, the second engaging portion 612 shifts in a direction of arrow E shown in Fig. 4. On the other hand, the back lock releasing cable 820 slides in the inside of the opening portion 612a, whereby the back lock releasing cable 820 does not shift according to the shift of the second engaging portion 612. In this condition, the second engaging portion 612 does not engage with a first engaging portion 822 which will be described hereinafter. Therefore, the back lock releasing cable 820 may not be loosened. In this case, the direction of arrow E shown in Fig. 4 is a direction in which the second engaging portion 612 shifts so as to be separated from the first engaging portion 822.

Fig. 1 shows a reference numeral 710 indicating a remote-control lever. The remote-control lever 710 may be provided in a luggage compartment of a vehicle having a hatchback structure and can be operated by tilting in a direction of arrow C. The remote-control lever 710 is connected to an end of the operating cable 720. As shown in Fig. 3, the other end of the operating cable 720 is provided with a fifth engaging portion 721 engaging with a cooperating portion 811 of a relay unit 810 which will be described hereinafter. In the embodiment, the remote-control lever 710, the operating cable 720, and the fifth engaging portion 721 form an operating device.

When the remote-control lever 710 is pulled by an operator (not shown in the figure), the relay unit 810 is operated through the operating cable 720 and the fifth engaging portion 721.

Fig. 1 shows a reference numeral 810 indicating a relay unit that is fixed to the body 10 and has the cooperating portion 811. As shown in Fig. 3, the relay unit 810 engages with the fourth engaging portion 331 of the cushion lock releasing cable 330, the fifth engaging portion 721 of the operating cable 720, and the third engaging portion 821 of the back lock releasing cable 820, through the cooperating portion 811. According to this engagement, in the cooperating portion 811, the cushion lock releasing cable 330 and the back lock releasing cable 820 cooperate.

When the remote-control lever 710 is pulled by an operator (not shown in the figure), the fifth engaging portion of the operating cable 720 is pulled, and the cooperating portion 811 engaging with the fifth engaging portion 721 is shifted. According to the shift of the cooperating portion 811, the fourth engaging portion 331 and the third engaging portion 821, which engage with the cooperating portion 811, are shifted, and the cushion lock releasing cable 330 and the back lock releasing cable 820 are pulled.

In Figs. 1 and 2, a part of the back lock releasing cable 820 passes through the inside of the seat back 400. As shown in Fig. 4, the back lock releasing cable 820 is slidably inserted into the opening portion 612a of the second engaging portion 612. The other end of the back lock releasing cable 820 is provided with a first engaging portion 822 that engages with the second engaging portion 612 when the remote-control lever 710 is operated. That is, the back lock releasing cable 820 has the third engaging portion 821 and the first engaging portion 822 at the both ends thereof, respectively. In the embodiment, the relay unit 810, the cooperating portion 811, the back lock releasing cable 820, the third engaging portion 821, and the first engaging portion 822 form an adjusting device.

The first engaging portion 822 of the back lock releasing cable 820 is disposed so as to be separated from the second engaging portion 612 with a predetermined distance. That is, the first engaging portion 822 is disposed so that the first engaging portion 822 does not engage with the second engaging portion 612 even when the back lock releasing cable 820 is pulled by a short distance. The length of the back lock releasing cable 820 and the position of the first engaging portion 822 are adjusted so that the back lock 510 is released after the cushion lock 210 is released.

When the cushion lock releasing cable 820 is pulled, the first engaging portion 822 shifts in the direction of arrow E shown in Fig. 4. Then, the first engaging portion 822 engages with the second engaging portion 612, which is provided to the bracket 611, and shifts the second engaging portion 612 in the direction of arrow E. According to this shift of the second engaging portion 612, the bracket 611 and the back lock 510 are disengaged, and the back lock 510 is thereby released.

For example, in order to prevent the operating cable 720 from being disconnected when the remote-control lever 710 is dragged, a stopper is preferably provided. In order to prevent the operating cable 720 from being disconnected, adjustments are preferably performed so that the remote-control lever 710 is pulled by a full stroke first, the back lock 510 is then pulled by a full stroke, and the cushion lock 210 is then finally pulled by a full stroke.

### Operation Example of Vehicle Seat

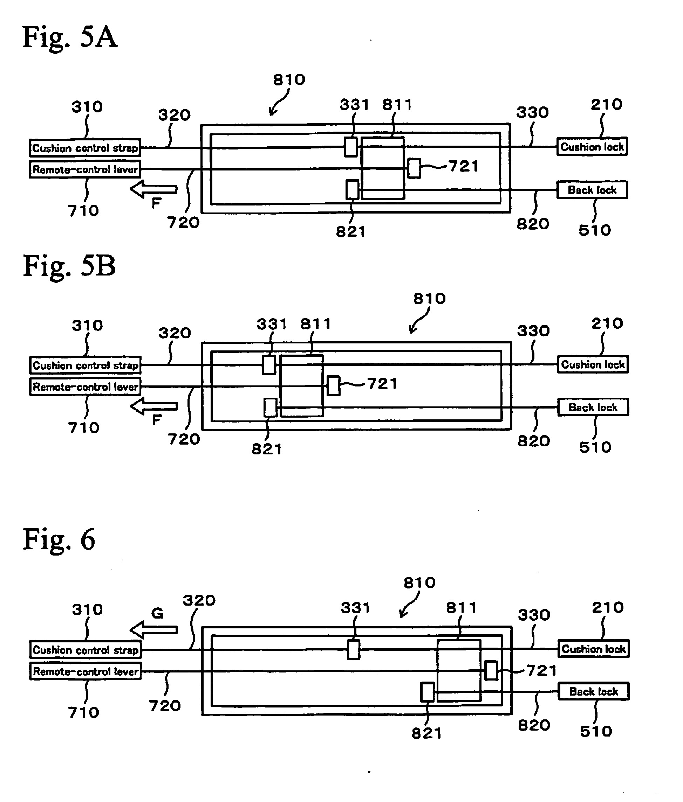

First, a case in which the cushion lock 210 and the back lock 510 are released by operating the remote-control lever 710 will be described. Figs. 5A and 5B show a schematic structure of a relay unit when a remote-control lever is used.

When the remote-control lever 710 is pulled by an operator (not shown in the figure), as shown in Fig. 5, the fifth engaging portion 721 of the operating cable 720 is pulled, and the cooperating portion 811 engaging with the fifth engaging portion 721 shifts in a direction of arrow F. According to the shift of the cooperating portion 811, the fourth engaging portion 331 and the third engaging portion 821 engaging with the cooperating portion 811 are shifted, and the cushion lock releasing cable 330 and the back lock releasing cable 820 are pulled.

When the cushion lock releasing cable 330 is pulled, the cushion lock 210 is released. Then, as shown in Figs. 1 and 2, the seat cushion 100 tilts in the direction of arrow A and stands upright. On the other hand, as shown in Fig. 4, when the back lock releasing cable 820 is pulled, and the first engaging portion 822 shifts in the direction of arrow E, the back lock 510 is not released. This is because the first engaging portion 822 and the second engaging portion 612 are separated from each other with a predetermined distance.

Then, when the remote-control lever 710 is pulled more by the operator, as shown in Fig. 5B, the fifth engaging portion 721 of the operating cable 720 is pulled, and the cooperating portion 811 engaging with the fifth engaging portion 721 shifts more in the direction of arrow E. According to the shift of the cooperating portion 811, the fourth engaging portion 331 and the third engaging portion 821, which engage with the cooperating portion 811, are shifted, and the cushion lock releasing cable 330 and the back lock releasing cable 820 are pulled.

When the back lock releasing cable 820 is pulled further, as shown in Fig. 4, the first engaging portion 822 shifts in the direction of arrow E. Then, the first engaging portion 822 engages with the second engaging portion 612, and the second engaging portion 612 is thereby shifted in the direction of arrow E. Accordingly, the back lock 510 is released, whereby the seat back 400 tilts in the direction of arrow B and is approximately flat as shown in Figs. 1 and 2.

Thus, by operating the remote-control lever 710, the relay unit 810 is operated, and the timing of releasing the cushion lock 210 and the timing of releasing the back lock 510 are adjusted. Accordingly, the cushion lock 210 and the back lock 510 can be released in turn. Therefore, the convenience for users of the vehicle can be improved.

Next, a case, in which the cushion lock 210 and the back lock 510 are released by operating the cushion control strap 310 and the back control lever 610, will be described. Fig. 6 shows a schematic structure of a relay unit when a cushion control strap is used.

When the vehicle seat 1 is not occupied by a user, the cushion control strap 310 may be pulled by an operator (not shown in the figure). In this case, as shown in Fig. 6, the strap cable 320 is pulled in a direction of arrow G, and the cushion lock releasing cable 330 is pulled via the fourth engaging portion 331. As a result, the cushion lock 210 is released, and the seat cushion 100 thereby tilts in the direction of arrow A and stands upright as shown in Figs. 1 and 2.

Then, when the back control lever 610 is raised by an operator (not shown in the figure), the bracket 611 and the back lock 510 are disengaged, and the back lock 510 is thereby released. In this case, in accordance with the shift of the bracket 611, the second engaging portion 612 shifts in the direction of arrow E shown in Fig. 4. Since the back lock releasing cable 820 slides in the inside of the opening portion 612a, the back lock releasing cable 820 does not shift according to the shift of the second engaging portion 612. In this condition, the second engaging portion 612 does not engage with the first engaging portion 822. Therefore, the back lock releasing cable 820 may not be loosened.

As described above, when the vehicle seat 1 is not occupied by a user, by operating the cushion control strap 310 and then operating the back control lever 610, the cushion lock 210 and the back lock 510 can be independently released. Therefore, the convenience and the safety for users of the vehicle can be improved.

### (2) Second Embodiment

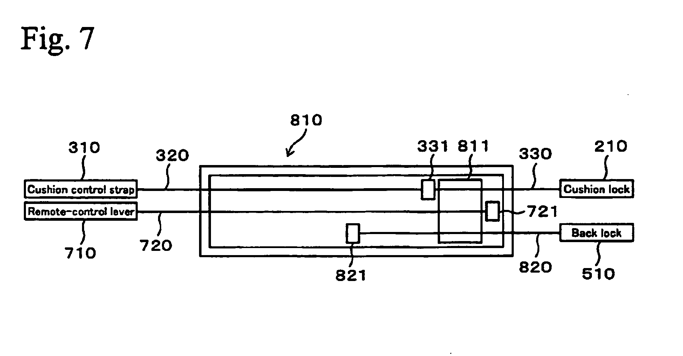

In the second embodiment of a vehicle seat, the third engaging portion 821 and the first engaging portion 822 of the back lock releasing cable 820 of the above first embodiment are rearranged. Accordingly, the positions of the third engaging portion 821 and the first engaging portion 822 of the back lock releasing cable 820 will be mainly described, and structures similar to the structures of the first embodiment will not be described. Fig. 7 shows a schematic structure of a relay unit and peripheral objects relating to the second embodiment.

As shown in Fig. 7, the third engaging portion 821 of the back lock releasing cable 820 is positioned so as to be separated from the cooperating portion 811 with a predetermined distance. That is, the third engaging portion 821 is arranged so that the cooperating portion 811 does not engage with the third engaging portion 821 even when the cooperating portion 811 shifts slightly toward the third engaging portion 821. The first engaging portion 822 of the back lock releasing cable 820 is positioned so as to be near the second engaging portion 612 compared to the case of the first embodiment.

When the remote-control lever 710 is pulled by an operator (not shown in the figure), the cooperating portion 811 shifts toward the third engaging portion 821. According to the shift of the cooperating portion 811, the cushion lock releasing cable 330 is pulled, and the cushion lock 210 is thereby released. As a result, the seat cushion 100 tilts and stands upright. In this case, the cooperating portion 811 does not engage with the third engaging portion 821.

Then, when the remote-control lever 710 is pulled more by the operator, the cooperating portion 811 engages with the third engaging portion 821, and the back lock releasing cable 820 is thereby pulled. As a result, the first engaging portion 822 engages with the second engaging portion 612, and the back lock 510 is thereby released. Then, the seat back 400 tilts and is approximately flat.

In the second embodiment, by operating the remote-control lever 710, the relay unit 810 is operated, and the timing of releasing the cushion lock 210 and the timing of releasing the back lock 510 are adjusted. Therefore, the cushion lock 210 and the back lock 510 can be released in turn. Accordingly, the convenience for users of the vehicle can be improved.

The present invention can be used for vehicle seats to be mounted in vehicles such as automobiles.

## Claims

1. A vehicle seat comprising:
- a seat cushion (100);
- a seat back (400);
- a shifting device (110) for shifting the seat cushion;
- a tilting device (410) for tilting the seat back;
- a cushion locking device (210, 220) for preventing the seat cushion (100) from shifting;
- a back locking device (510, 520) for preventing the seat back (400) from tilting;
- a cushion lock releasing device (310, 320, 330, 331) for releasing locking of the cushion locking device (210, 220);
- a back lock releasing device (610, 611, 612) for releasing locking of the back locking device (510, 520);
- an adjusting device (810, 811, 820, 821, 822) for adjusting timing of releasing the locking of the cushion locking device (210, 220) and timing of releasing the locking of the back locking device (510, 520); and
- an operating device (710, 720, 721) for operating the adjusting device (810, 811, 820, 821, 822),
**characterized in that**
- the cushion lock releasing device (310, 320, 330, 331) comprises a cushion lock releasing cable (330) for releasing the locking of the cushion locking device (210, 220),
- the adjusting device (810, 811, 820, 821, 822) comprises a back lock releasing cable (820) for releasing the locking of the back locking device (510, 520) and comprises a relay unit (810) having a cooperating portion (811) for cooperating the cushion lock releasing cable (330) and the back lock releasing cable (820),
- the operating device (710, 720, 721) comprises an operating cable (720) for operating the cooperation portion (811),
- the back lock releasing cable (820) comprises a third engaging portion (821) that is engaged with the cooperating portion (811) by operating the operating device (710, 720, 721), and
- the third engaging portion (821) is positioned apart from the cooperating portion (811) with a predetermined distance therebetween, whereby the operating device (710, 720, 721) is operated so that the locking of the cushion locking device (210, 220) is released while the cooperating portion (811) shifts toward the third engaging portion (821), thereby engaging with a fourth engaging portion (331) fixed to the cushion lock releasing cable (330), and then the cooperating portion (811) engages with the third engaging portion (821), and the locking of the back locking device (510, 520) is thereby released.

2. The vehicle seat according to claim 1,
wherein the back lock releasing cable (820) comprises a first engaging portion (822) that is engageable with the back lock releasing device (610, 611, 612), and the back lock releasing device (610, 611, 612) comprises a second engaging portion (612) that is engaged with the first engaging portion (822) by operating the operating device (710, 720, 721), and
wherein the first engaging portion (822) is positioned apart from the second engaging portion (612) with a predetermined distance therebetween, whereby the operating device (710, 720, 721) is operated so that the locking of the cushion locking device (210, 220) is released, and then the first engaging portion (822) engages with the second engaging portion (612), and the locking of the back locking device (210, 220) is thereby released.

3. The vehicle seat according to claim 2,
wherein the second engaging portion (612) is provided with an opening portion (612a) into which the back lock releasing cable (820) is inserted, and
wherein the back lock releasing device (610, 611, 612) is operated so that the second engaging portion (612) shifts in a direction opposite to the first engaging portion (822), and the locking of the back locking device (510, 520) is thereby released.

## Patentansprüche

1. Ein Fahrzeugsitz enthaltend:
- ein Sitzkissen (100);
- eine Rückenlehne (400);
- eine Schiebeeinrichtung (110) zum Verschieben des Sitzkissens;
- eine Schwenkeinrichtung (410) zum Verschwenken der Rückenlehne;
- eine Kissenverriegelungseinrichtung (210, 220) zum Verhindern des Verschiebens des Sitzkissens (100);
- eine Lehnenverriegelungseinrichtung (510, 520) zum Verhindern des Verschwenkens der Rückenlehne (400);
- eine Kissenentriegelungseinrichtung (310, 320, 330, 331) zur Entriegelung der Kissenverriegelungseinrichtung (210, 220);
- eine Lehnenentriegelungseinrichtung (610, 611, 612) zur Entriegelung der Lehnenverriegelungseinrichtung (510, 520);
- eine Einstelleinrichtung (810, 811, 820, 821, 822) zum Einstellen des Zeitpunkts des Entriegelns der Kissenverriegelungseinrichtung (210, 220) und des Zeitpunkts des Entriegelns der Lehnenverriegelungseinrichtung (510, 520); und
- eine Betätigungseinrichtung (710, 720, 721) zur Betätigung der Einstelleinrichtung (810, 811, 820, 821, 822),
**dadurch gekennzeichnet, dass**
- die Kissenentriegelungseinrichtung (310, 320, 330, 331) ein Kissenentriegelungskabel (330) zur Entriegelung der Kissenverriegelungseinrichtung (210, 220) aufweist;
- die Einstelleinrichtung (810, 811, 820, 821, 822) ein Lehnenentriegelungskabel (820) zum Entriegeln der Lehnenverriegelungseinrichtung (510, 520) aufweist und eine Relaiseinheit (810) mit einem zusammenwirkenden Teil (811) zur gemeinsamen Betätigung des Kissenentriegelungskabels (330) und des Lehnenentriegelungskabels (820) aufweist;
- die Betätigungseinrichtung (710, 720, 721) ein Betätigungskabel (720) zur Betätigung des zusammenwirkenden Teils (811) aufweist;
- das Lehnenentriegelungskabel (820) ein drittes Eingriffsteil (821) welches mit dem zusammenwirkenden Teil (811) durch Betätigen der Betätigungseinrichtung (710, 720, 721) in Eingriff kommt, aufweist; und
- das dritte Eingriffsteil (821) in einem bestimmten Abstand vom zusammenwirkenden Teil (811) angeordnet ist, wobei die Betätigungseinrichtung (710, 720, 721) derart betätigt ist, dass die Verriegelung de Kissenverriegelungseinrichtung (210, 220) entriegelt wird, während das zusammenwirkende Teil (811) auf das dritte Eingriffsteil (821) zu sich verschiebt, dabei mit einem vierten am Kissenentriegelungskabel (330) befestigten Eingriffsteil (331) in Eingriff kommt, und dann das zusammenwirkende Teil (811) mit dem dritten Eingriffsteil (821) in ein Eingriff kommt und die Lehnenverriegelungseinrichtung (510, 520) dabei entriegelt wird.

2. Der Fahrzeugsitz gemäß Anspruch 1,
wobei das Lehnenentriegelungskabel (820) ein erstes Eingriffsteil (822), welches mit der Lehnenentriegelungseinrichtung (610, 611, 612) in Eingriff kommt, aufweist und die Lehnenentriegelungseinrichtung (610, 611, 612) ein zweites Eingriffsteil (612), welches mit dem ersten Eingriffsteil (822) durch Betätigen der Betätigungseinrichtung (710, 720, 721) in Eingriff kommt, aufweist und
wobei das erste Eingriffsteil (822) mit einem bestimmten Abstand vom zweiten Eingriffsteil (612) angeordnet ist, wodurch die Betätigungseinrichtung (710, 720, 721) derart betätigt ist, dass die Verriegelung der Kissenverriegelungseinrichtung (210, 220) entriegelt wird und dann das erste Eingriffsteil (822) mit dem zweiten Eingriffsteil (612) in Eingriff kommt und die Verriegelung der Lehnenverriegelungseinrichtung (210, 220) dadurch entriegelt wird.

3. Der Fahrzeugsitz gemäß Anspruch 2,
wobei das zweite Eingriffsteil (612) mit einem Öffnungsteil (612a), in welches das Lehnenverriegelungskabel (820) eingefügt ist, ausgestattet ist, und
wobei die Lehnenentriegelungseinrichtung (610, 611, 612) derart betätigt wird, dass das zweite Eingriffsteil (612) in einer Richtung entgegengesetzt zum ersten Eingriffsteil (822) sich verschiebt und die Verriegelung der Lehnenverriegelungseinrichtung (510, 520) dabei entriegelt wird.

## Revendications

1. Siège de véhicule comprenant:
- un coussin (100) de siège ;
- un dossier (400) de siège ;
- un dispositif (110) de déplacement pour déplacer le coussin de siège ;
- un dispositif (410) de basculement pour basculer le dossier de siège ;
- un dispositif (210, 220) de verrouillage de coussin pour empêcher le coussin (100) de siège de se déplacer ;
- un dispositif (510, 520) de verrouillage de dossier pour empêcher le dossier (400) de siège de basculer ;
- un dispositif (310, 320, 330, 331) de déverrouillage de coussin pour déverrouiller le dispositif (210, 220) de verrouillage de coussin ;
- un dispositif (610, 611, 612) de déverrouillage de dossier pour déverrouiller le dispositif (510, 520) de verrouillage de dossier ;
- un dispositif (810, 811, 820, 821, 822) de réglage pour régler la synchronisation du déverrouillage du dispositif (210, 220) de verrouillage de coussin et la synchronisation du déverrouillage du dispositif (510, 520) de verrouillage de dossier ; et
- un dispositif (710, 720, 721) de fonctionnement pour faire fonctionner le
dispositif (810, 811, 820, 821, 822) de réglage,
**caractérisé en ce que**
- le dispositif (310, 320, 330, 331) de déverrouillage de coussin comprend un câble (330) de déverrouillage de coussin pour déverrouiller le verrouillage du dispositif (210, 220) de verrouillage de coussin,
- le dispositif (810, 811, 820, 821, 822) de réglage comprend un câble (820) de déverrouillage de dossier pour déverrouiller le dispositif (510, 520) de verrouillage de dossier et comprend une unité (810) relais ayant une partie (811) de coopération pour faire coopérer le câble (330) de déverrouillage de coussin et le câble (820) de déverrouillage de dossier,
- le dispositif (710, 720, 721) de fonctionnement comprend un câble (720) de fonctionnement pour faire fonctionner la partie (811) de coopération,
- le câble (820) de déverrouillage de dossier comprend une troisième partie (821) d'enclenchement qui coopère avec la partie (811) de coopération en faisant fonctionner le dispositif (710, 720, 721) de fonctionnement, et
- la troisième partie (821) d'enclenchement est placée à une distance entre elles déterminée à l'avance de la partie (811) de coopération, le dispositif (710, 720, 721) de fonctionnement fonctionnant de manière à ce que le verrouillage du dispositif (210, 220) de verrouillage de coussin soit déverrouillé, tandis que la partie (811) de coopération se déplace en direction de la troisième partie (821) d'enclenchement, en coopérant ainsi avec une quatrième partie (331) d'enclenchement fixée au câble (330) de déverrouillage de coussin, puis la partie (811) de coopération coopère avec la troisième partie (821) d'enclenchement et le verrouillage du dispositif (510, 520) de verrouillage de dossier est ainsi déverrouillé.

2. Siège de véhicule suivant la revendication 1,
dans lequel le câble (820) de déverrouillage de dossier comprend une première partie (822) d'enclenchement, qui peut s'enclencher avec le dispositif (610, 611, 612) de déverrouillage de dossier et le dispositif (610, 611, 612) de déverrouillage de dossier, comprend une deuxième partie (612) d'enclenchement, qui est enclenchée avec la première partie (822) d'enclenchement en faisant fonctionner le dispositif (710, 720, 721) de fonctionnement, et
dans lequel la première partie (822) d'enclenchement est placée à une distance déterminée à l'avance entre elles de la deuxième partie (612) d'enclenchement, le dispositif (710, 720, 721) de fonctionnement fonctionnant de manière à ce que le verrouillage du dispositif (210, 220) de verrouillage de coussin soit déverrouillé, puis la première partie (822) d'enclenchement s'enclenche avec la deuxième partie (612) d'enclenchement et le verrouillage du dispositif (210, 220) de verrouillage de dossier est ainsi déverrouillé.

3. Siège de véhicule suivant la revendication 2,
dans lequel la deuxième partie (612) d'enclenchement est munie d'une partie (612a) d'ouverture, dans laquelle le câble (820) de déverrouillage de dossier est inséré, et
dans lequel le dispositif (610, 611, 612) de déverrouillage de dossier fonctionne de manière à ce que la deuxième partie (612) d'enclenchement se déplace dans un sens contraire à la première partie (822) d'enclenchement et le verrouillage du dispositif (510, 520) de verrouillage de dossier est ainsi déverrouillé.
